# EUROPÄISCHE PATENTSCHRIFT

(11) **EP 3 515 969 B1**
(45) Veröffentlichungstag und Bekanntmachung des Hinweises auf die Patenterteilung: **18.12.2019**
(21) Anmeldenummer: 16774650.2
(22) Anmeldetag: 26.09.2016
(51) Int. Cl.: C08G 77/388

(54) **SILOXANE MIT BIS-(2-CYANOETHYL)AMINO-RESTEN**
SILOXANES HAVING BIS-(2-CYANOETHYL)AMINO-GROUPS
SILOXANE AYANT DES RESTES BIS-(2-CYANOETHYL)-AMINÉS

(43) Veröffentlichungstag der Anmeldung: 31.07.2019
(73) Patentinhaber: Wacker Chemie AG, 81737 München (DE)
(72) Erfinder: STEPP, Michael, 5122 Überackern (AT)
(74) Vertreter: Fritz, Helmut
(86) Internationale Anmeldenummer: PCT/EP2016/072874
(87) Internationale Veröffentlichungsnummer: WO 2018/054505

(56) Entgegenhaltungen:
- US-A- 4 570 010
- LOAYZA ARTEMIA ET AL: "Critical examination of chemically modified hybrid thermosets: Synthesis, characterization and mechanical behavior in the plateau regime of polyaminosiloxane-nitrile-DGEBA", POLYMER, Bd. 69, 9. Juni 2015 (2015-06-09), Seiten 178-185, XP029180686, ISSN: 0032-3861, DOI: 10.1016/J.POLYMER.2015.05.054 in der Anmeldung erwähnt

## Beschreibung

Die Erfindung betrifft Siloxane mit Bis-(2-cyanoethyl)amino-Resten, ein Verfahren zur Vernetzung der Siloxane zu Vulkanisaten, die Vulkanisate und ein Verfahren zur reversiblen Bindung von Schwefeldioxid an die Siloxane und Vulkanisate.

Die Absorption von Schwefeldioxid ist zur Reinigung von Abgasen aus Raffinerien oder aus Verbrennungsprozessen z.B. von Kraftwerken von großer Bedeutung für die Umwelt aber auch wirtschaftlich relevant. Man unterscheidet dabei zwischen nichtregenerativen Verfahren (z.B. durch Kalkwäsche unter Bildung von REA-Gips) und regenerativen Verfahren (z.B. das Wellman-Lord-Verfahren), bei denen das gebundene SO₂ wieder gezielt für die weitere Verwendung, z.B. zur Schwefelgewinnung, freigesetzt werden kann. Die regenerativen Verfahren teilen sich auf in Verfahren, bei denen chemische Reaktionen zur Assimilation von SO₂ führen und physikalische Verfahren. Letztere haben den Vorteil, dass sie meist vollständig reversibel sind und der Absorber nicht oft erneuert werden muss. Beispielsweise beschreiben Kim, H.S. et al. Proceedings of the World Congress on Civil, Structural and Environmental Engineering, Prague, March 30 - 31, 2016 (*s. auch* KR101495876*, KIST, 2013*) die Vorteile von nitrilfunktionellen tertiären Aminen z.B. N-Methyl-N,N-dipropionitril, die bis zu 2 Mol SO₂ pro Mol Amin reversibel binden können. Im Gegensatz zu den üblicherweise verwendeten Ethanolaminen gehen sie keine chemischen Reaktionen ein, sodass die SO₂-Desorption bei 80°C vollständig reversibel ist.

Untersuchungen zur thermischen Stabilität zeigten jedoch, dass sich die mit SO₂ beladenen Absorbentien thermisch bereits ab ca. 160°C zersetzen. Dieser Vorgang ist sehr stark exotherm, sodass die 100-K-Regel nach der TRAS 410 bei der benötigten Desorptionstemperatur von mindestens 80°C nicht eingehalten wird.

Gegenstand der Erfindung sind Siloxane der allgemeinen Formel 1

RₙSiO_{(4-n)/2} (1),

wobei
- **R**: einen Kohlenwasserstoffrest mit 1 - 16 C-Atomen, der substituiert sein kann mit Halogen-, Alkoxy-, Acyloxy-, Oximo-, Acryloxy- oder Methacryloxyresten, einen OH-Rest, C₁-C₄-Alkoxyrest, Oximorest der allgemeinen Formel -O=N**R⁵R⁶**, Aminorest der allgemeinen Formel -N**R⁷R⁸** oder einen Rest der allgemeinen Formel 2

-A-NR¹₂₋ₘ(CR²₂-CR³₂-CN)ₘ (2) ,
- **R¹**: Wasserstoff oder Kohlenwasserstoffrest mit 1 - 6 C-Atomen oder -C(O)-R',
- **A**: einen bifunktionellen Kohlenwasserstoffrest mit 1 - 18 C-Atomen, der unterbrochen sein kann durch ein oder mehrere nicht benachbarte Heteroatome, die ausgewählt werden aus O, S und NR⁴,
- **R⁴**: Wasserstoff oder Kohlenwasserstoffrest mit 1 - 6 C-Atomen oder einen Rest CR^{2'}₂-CR^{3'}₂-CN oder einen Rest -C(O)-R",
- **R'**, **R², R³, R^{2'}**, **R^{3'}** und **R"**: Wasserstoff oder Kohlenwasserstoffrest mit 1 - 6 C-Atomen,
- **R⁵, R⁶, R⁷** und **R⁸**: Methyl-, Ethyl-, n-Propyl- oder i-Propylrest,
- **m**: die Werte 0, 1 oder 2 und
- **n**: den durchschnittlichen Wert 2,00 - 2,66 bedeuten,
mit der Maßgabe, dass
mindestens 50 Mol-% aller Reste **R** Alkylrest bedeuten, mindestens 0,5 Mol-% aller Reste **R** einen Rest der allgemeinen Formel 2 bedeuten, in der **m** die Werte 1 oder 2 bedeutet, bei mindestens 5 Mol-% aller Reste der allgemeinen Formel 2 **m** den Wert 2 bedeutet, maximal 10 Mol-% aller Reste **R¹** einen Wasserstoffrest bedeuten und
mindestens 3 und maximal 2000 Si-Atome pro Molekül vorliegen.

Im Zustand der SO₂-Beladung sind die erfindungsgemäßen Siloxane der allgemeinen Formel 1 mit Bis-(2-cyanoethyl)-aminoalkyl-Einheiten deutlich stabiler als die bekannten nitrilfunktionellen tertiären Amine, zeigen aber das analoge Absorptionsverhalten. Die Desorption kann deshalb bei deutlich höherer Temperatur durchgeführt und dadurch beschleunigt werden. Dieses thermische Verhalten war nicht vorhersehbar.

Die Siloxane der allgemeinen Formel 1 sind vorzugsweise linear, cyclisch oder verzweigt. Sie sind Oligosiloxane oder Polysiloxane.

Beispiele für C₁-C₁₆-Kohlenwasserstoffreste **R** sind Alkylreste wie der Methyl-, Ethyl-, n-Propyl-, iso-Propyl-, n-Butyl-, 2-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste oder auch Alkenylreste, wie der Vinyl-, 2-Propen-2-yl-, Allyl-, 3-Buten-1-yl-, 5-Hexen-1-yl-, 10-Undecen-1-yl, Cycloalkenylreste (2-Cyclohexenyl-, 3-Cyclohexenyl-, Cyclopentadienylrest, 2-(Cyclohex-3-en-1-yl)ethyl, Arylreste, wie der Phenyl-, Biphenylyl-, Naphthylrest; Alkarylreste, wie o-, m-, p-Tolylreste und Phenethylreste (2-Phenylethyl-, 1-Phenylethylrest) und Aralkylreste, wie der Benzylrest. Beispiele für substituierte Kohlenwasserstoffreste sind halogenierte Kohlenwasserstoffe, wie der 3,3,3-Trifluorpropyl und 5,5,5,4,4,3,3-Heptafluorpentylrest. Vorzugsweise weist **R** 1 - 6 C-Atome, besonders bevorzugt 1 - 4 C-Atome auf. Besonders bevorzugt steht **R** für den Methylrest. Unter den ungesättigten Resten ist der Vinylrest bevorzugt.

Die Halogenreste an **R** sind vorzugsweise Chlor, Fluor oder Brom. Die Alkoxyreste an **R** weisen vorzugsweise 1 - 6 C-Atome auf und werden insbesondere ausgewählt aus Ethyl- und Methylresten.

Beispiele für die Kohlenwasserstoffreste **R¹, R', R², R³, R⁴, R^{2'}**, **R^{3'}** und **R"** mit 1 - 6 C-Atomen sind bei den Beispielen für **R** aufgeführt. Bevorzugte Kohlenwasserstoffreste sind jeweils Ethyl- und Methylreste.
Bevorzugt als **R¹** sind Wasserstoff und CH₃-CO-.

Bevorzugt als **R², R³** ist jeweils Wasserstoff.

Vorzugsweise bedeutet **A** einen bifunktionellen Kohlenwasserstoffrest mit 1 - 8 C-Atomen, der unterbrochen sein kann durch ein oder mehrere nicht benachbarte Heteroatome, die ausgewählt werden aus O und NR⁴. Bevorzugte Reste **A** sind -CH₂-CH₂-CH₂-, -CH₂-CH₂-CH₂-N(-CH₂-CH₂-CN)-CH₂-CH₂-, -CH₂-CH₂-CH₂-N(-COCH₃)-CH₂-CH₂-, -CH₂-CH₂-CH₂-NH-CH₂-CH₂-.

Die Reste **R⁵, R⁶, R⁷** und **R⁸** sind vorzugsweise Methyl- oder Ethylreste.

In einer bevorzugten Ausführungsform werden 1 bis 75 Mol-%, insbesondere 3 bis 20 Mol-% der Reste **R** ausgewählt aus den Resten OH, C₁-C₄-Alkoxy, Oximorest der allgemeinen Formel -O=N**R⁵R⁶** und Aminorest der allgemeinen Formel -N**R⁷R³**. Die Reste OH, C₁-C₄-Alkoxy, Oximorest der allgemeinen Formel -O=N**R⁵R⁶** und Aminorest der allgemeinen Formel -N**R⁷R⁸** sind direkt an die Siliciumatome gebunden.

Vorzugsweise bedeutet **m** bei mindestens 20 Mol-%, insbesondere bei mindestens 50 Mol-% aller Reste der allgemeinen Formel 2 den Wert 2.

**n** weist vorzugsweise den durchschnittlichen Wert 2,01 - 2,4 auf.

Vorzugsweise bedeuten höchstens 80 Mol-%, insbesondere höchstens 95 Mol-% aller Reste **R** einen Alkylrest.

Vorzugsweise bedeuten mindestens 1 Mol-%, insbesondere mindestens 5 Mol-% aller Reste **R** einen Rest der allgemeinen Formel 2, in der **m** die Werte 1 oder 2 bedeutet.

Vorzugsweise bedeuten maximal 10 Mol-% aller Reste **R¹** einen Wasserstoffrest.

Vorzugsweise liegen mindestens 30 und maximal 600 Si-Atome pro Molekül der allgemeinen Formel 1 vor.

Die Herstellung der Siloxane der allgemeinen Formel 1 erfolgt vorzugsweise durch aza-Michael-Addition von Acrylnitril an primäre oder sekundäre Aminfunktionen von aminofunktionellen (Poly)Siloxanen, wie bereits von Baselga, J. et al. in Polymer 69, 178-185 (2015*)* beschrieben.

Siloxane der allgemeinen Formel 1, die Si-gebundene Resten aufweisen, die ausgewählt werden aus OH, C₁-C₄-Alkoxy, Oximorest der allgemeinen Formel -O=N**R⁵R⁶** und Aminorest der allgemeinen Formel -N**R⁷R⁸** werden vorzugsweise hergestellt durch Umsetzung silanolhaltiger Siloxane der allgemeinen Formel 1 mit tri- oder tetrafunktionellen Amino-, Alkoxy- oder Oximo-Gruppen aufweisenden Silanen oder deren Teilhydrolysaten gegebenenfalls in Gegenwart eines Kondensationskatalysators wie z.B. Dibutylzinnoxid, Dibutylzinndilaurat, Tetraisopropyltitanat, Tetra-n-butyltitanat, Aluminiumtri-sek-butylat, Tetra-n-butylammoniumfluorid, Tetra-n-butylammoniumhydroxid, Lithiumhydroxid. Beispiele für solche Silane sind: Si(OEt)₄, Si(O-N=CMeEt)₄, Si(NEt₂)₄, (EtO)₃Si-O-Si(OEt)₃, Me-Si(OEt)₃, Me-Si(OMe)₃, Vinyl-Si(OMe)₃, Vinyl-Si(OEt)₃, Phenyl-Si(OEt)₃, Phenyl-Si (OMe)₃, Me-Si(O-N=CEtMe)₃, Me-Si(NEt₂)₃, O(CH₂CH₂)₂N-CH₂-Si(OEt)₃, Phenyl-NH-CH₂-Si(OMe)₃, (H₃CCH₂CH₂CH₂)₂N-CH₂-Si(OEt)₃, H₂N-(CH₂)₃-Si(OMe)₃, H₂N-(CH₂)₃-Si(OEt) ₃, H₂N-(CH₂)₂-NH-(CH₂)₃-Si(OMe) ₃, Cyclohexyl-NH-(CH₂)₃-Si(OMe)₃, Cyclohexyl-NH-(CH₂)₃-Si(OEt)₃, H₂C=CH-COO-(CH₂)₃-Si(OEt) ₃, H₂C=CH-COO-(CH₂)₃-Si(OMe)₃, H₂C=CH-COO-CH₂-Si(OMe) ₃, H₂C=CH-COO-CH₂-Si(OEt) ₃, H₂C=C(CH₃)-COO-(CH₂)₃-Si(OEt)₃, H₂C=C(CH₃)-COO-(CH₂)₃-Si(OMe) ₃, H₂C=C(CH₃)-COO-CH₂-Si(OMe)₃, H₂C=C(CH₃)-COO-CH₂-Si(OEt)₃, HS-(CH₂)₃-Si(OMe)₃.

NH-Gruppen, welche die thermische Stabilität und das SO₂-Absorptions- sowie Regenerationsverhalten oder die Additionsvernetzung beeinträchtigen könnten, können durch nachträgliche Alkylierung mit Alkylhalogeniden oder Acetylierung mit Carbonsäuren oder Carbonsäurederivaten (z.B. Acetylchlorid oder Isopropenylacetat) in stabile sekundäre Aminfunktionen oder Carbonsäureamid-Funktionen überführt werden.

Die Siloxane der allgemeinen Formel 1 können zur reversiblen Bindung von Schwefeldioxid (SO₂) eingesetzt werden.

Die Siloxane der allgemeinen Formel 1 können nicht nur als Absorberflüssigkeit z.B. in einem Wäscher eingesetzt werden, sondern auch zu Silicon-Vulkanisaten vernetzt und zur Vergrößerung der Oberfläche beispielsweise als Filamente in Form eines Vlieses oder als Coating auf Gerüsten oder Füllkörpern zur reversiblen Bindung von Schwefeldioxid mit SO₂ oder einer SO₂-haltigen festen, flüssigen oder gasförmigen Stoffmischung in Kontakt gebracht werden. Beispielsweise können sie in einen Abgaskamin eingebaut werden. Die SO₂-Desorption erfolgt dann je nach Bedarf durch Kontakterwärmung oder indirekt z.B. mit einem heißen Gas-, Dampf- oder Flüssigkeitsstrom oder Infrarot- oder Mikrowellen-Bestrahlung. Dies kann beim Druck der umgebenden Atmosphäre oder bei vermindertem oder erhöhtem Druck erfolgen. Die Temperatur wird dabei einerseits vom thermischen Zersetzungsverhalten (100K-Regel bzgl. Onset-Temperatur nach TRAS410) und andererseits von der Wirtschaftlichkeit bestimmt. Sie liegt bei Atmosphärendruck üblicherweise im Bereich zwischen 60°C und 100°C und kann durch Erniedrigung des Arbeitsdruckes entsprechend verringert werden.

Bei Verwendung des flüssigen Siloxane der allgemeinen Formel 1 in einem Wäscher, wird die mit SO₂ beladene Waschflüssigkeit vorzugsweise in einen angeschlossenen Apparat gefördert und dort ausgeheizt, was einen kontinuierlichen, unterbrechungsfreien Betrieb ermöglicht. Ebenfalls üblich ist eine Tandemfahrweise, bei der mindestens 2 Wäscher wechselweise für die Absorption und die Desorption verwendet werden.

Beim Einsatz der Siloxane und der zu Silicon-Vulkanisaten vernetzten Siloxane der allgemeinen Formel 1 als fester Absorber bietet sich die Tandemfahrweise an, bei der jeweils eine Absorberstrecke für die Absorption verwendet wird, während die zweite für die Regeneration verwendet wird. Insbesondere bei geringen Absorptionsraten (in mol SO₂/h) sind auch Verfahren anwendbar, bei denen Einbauten, die aus dem erfindungsgemäßen Vulkanisat bestehen, bzw. damit beschichtet sind, von Zeit zu Zeit gegen frische, unbeladene ausgetauscht werden. Die SO₂-beladenen Absorber können dann gezielt in einer entsprechenden Vorrichtung (z.B. Ofen) regeneriert werden.

Das freigesetzt SO₂-Gas kann durch entsprechende Ankopplung an entsprechende Anlagen dann gezielt einer Verwertung oder Entsorgung zugeführt werden.

Die mit den erfindungsgemäßen Siloxane der allgemeinen Formel 1 herstellbaren Vulkanisate sind ebenfalls Gegenstand der Erfindung. Ihre Herstellung erfolgt entweder durch Feuchtigkeitsvernetzung über Hydrolyse und Kondensation gegebenenfalls an den Siloxanen der allgemeinen Formel 1 vorhandenen Si-gebundene Amino-, Alkoxy- oder Oximo-Gruppen unter Freisetzung der entsprechenden Spaltprodukte Amin, Alkohol oder Oxim oder durch Additionsvernetzung über an den erfindungsgemäßen Siloxanen der allgemeinen Formel 1 vorhandenen ungesättigten Kohlenwasserstoffresten, vorzugsweise Vinyl, mit SiH-Vernetzern in Gegenwart von Katalysatoren oder Radikalinitiatoren oder durch Strahlenvernetzung über an den Siloxanen der allgemeinen Formel 1 vorhandenen photovernetzbaren Gruppen, insbesondere UV-Vernetzung über UV-aktivierbare Gruppen. Beispiele für photovernetzbaren Gruppen sind Acryl-, Methacrylgruppen oder Thiol-En-Kombinationen. Zusätzlich können verstärkende Füllstoffe, wie hydrophobierte Kieselsäure, Vernetzungsverzögerer, Rheologieadditive, Weichmacher, Haftvermittler, Farbpigmente, Säure-Base-Indikatoren und weitere Hilfsstoffe zugemischt werden.

Die Siloxane der allgemeinen Formel 1 können auch als Additive in vernetzbare Standard-Silicon-Mischungen eingesetzt werden. Entscheidend für die Absorber-Kapazität ist dabei die Dichte an funktionellen Gruppen der allgemeinen Formel 2 (mol/kg). Sie liegt vorzugsweise sowohl in den flüssigen Siloxane der allgemeinen Formel 1 als auch in den damit hergestellten Vulkanisaten im Bereich von 0,1 - 4,4 mol/kg, bevorzugt im Bereich von 0,5 - 2 mol/kg, besonders bevorzugt zwischen 0,5 und 1 mol/kg.

Alle vorstehenden Symbole der Formeln weisen ihre Bedeutungen jeweils unabhängig voneinander auf. In allen Formeln ist das Siliciumatom vierwertig. Die Summe aller Bestandteile der Siliconmischung ergeben 100 Gew.-%.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele:

### Vergleichsbeispiel (nicht erfindungsgemäß):

### Herstellung von N,N-Bis-2-cyanoethyl-n-butylamin

In Anlehnung an Denton, Travis, T. et al., Journal of Organic Chemistry, 72(13), 4997-5000, 2007 wurde n-Butylamin bei 0 - 45°C mit einem Überschuss Acrylnitril in Methanol zu Bis-2-cyanoethyl-n-butylamin umgesetzt und das Zielprodukt im Vakuum bei 70°C/3hPa destilliert (Reinheit laut ¹H-NMR: 94,6%, 3,3% Monoaddukt, 1,9% 3-Methoxy-propionitril.

### SO₂-Absorption:

60 g (0,33 mol) N,N-Bis-2-cyanoethyl-n-butylamin wurden bei 22°C vorgelegt. Mittels Tauchrohr wurde SO₂-Gas, welches aus Natriumsulfit und 25%iger Schwefelsäure erzeugt wurde, so lange bei Normaldruck eingeleitet, bis keine Gewichtszunahme mehr feststellbar war. Die Temperatur stieg während der Einleitung auf maximal 33,4°C an. Nach 3 Stunden wurde die Dosierung beendet. Die Massezunahme betrug 20 g, was 0,312 mol SO₂ entspricht. Die spezifische Aufnahme lag demnach bei 0,945 Mol SO₂ pro Mol N,N-Bis-2-cyanoethyl-3-amino-Rest.

### Thermisches Verhalten des mit SO₂ beladenen nicht erfindungsgemäßen Absorbers

An einer Probe dieses SO₂-gesättigten N,N-Bis-2-cyanoethyl-n-butylamins wurde mittels DSC im Edelstahltiegel unter Stickstoffatmosphäre das thermische Verhalten zwischen Raumtemperatur und 400°C untersucht. Bei 164°C trat eine starke Exothermie auf. Die freigesetzte Wärmemenge lag bei 1236 kJ/kg N,N-Bis-2-cyanoethyl-n-butylamin. Dies entspricht einer Wärmemenge von 221 kJ/Mol. Bei einer abgeschätzten Wärmekapazität Cₚ von 1,8 kJkg⁻¹K⁻¹ würde die freigesetzte Wärmemenge zu einer adiabatischen Temperaturerhöhung von 687 K führen.

### Beispiel 1

### Verwendung eines erfindungsgemäßen Polysiloxans (Siloxan 1) als flüssigen SO₂-Absorber

### a) Herstellung eines vinylterminierten Dimethylpolysiloxans mit 3-Aminopropyl-Gruppen:

625 g eines Copolymers aus Vinyldimethylsiloxy- und Dimethylsiloxy-Einheiten mit einer Kettenlänge von 29,5, 190 g eines silanol-terminierten Polydimethylsiloxans mit etwa 50 Siloxy-Einheiten und 130 g eines Hydrolysats von 3-Aminopropyldimethoxymethylsilan wurden mit 1,5 g 20%iger methanolischer Kaliumhydroxidlösung vermischt und bei 130°C und 40 hPa drei Stunden äquilibriert. Nach Abkühlen auf 110°C wurden 0,5 g Essigsäure zugefügt. Es wurde 30 Minuten gerührt und über eine Drucknutsche filtriert. Gemäß ²⁹Si- und ¹H-NMR hatte das Filtrat folgende mittlere Zusammensetzung: Vinyl-SiMe₂O_{1/2} : Me₂SiO_{2/2} : MeSi(CH₂CH₂CH₂-NH₂)O_{2/2} = 2 : 29,8 : 3,2.

### b) Herstellung eines vinylterminierten Dimethylpolysiloxans mit N,N-Bis-2-cyanoethyl-3-Aminopropyl-Gruppen Siloxan 1:

22 g Acrylnitril (0,41 mol) wurden in 40 g Methanol vorgelegt. Bei 23°C wurde eine Lösung aus 100 g des Aminopolysiloxans (0,116 mol Amin) in 100 g Methanol binnen 45 Minuten zudosiert. Dabei erfolgte eine Temperaturerhöhung auf 27°C. Der Ansatz wurde bei 45°C insgesamt 34 Stunden gerührt bevor die Leichtsieder bis 70°C und 3 hPa abdestilliert wurden. Als Rückstand verblieb ein klares, farbloses Öl (Siloxan 1). Laut ¹H-NMR waren 90,3% der primären Aminogruppen in N,N-Bis-(2-cyanoethyl)-amino-Gruppen und 4,1% in Mono-2-cyanoethyl-aminoGruppen umgewandelt worden. Daraus ergibt sich eine Funktionsdichte von 0,95 mmol/g N,N-Bis-(2-cyanoethyl)-3-aminopropyl sowie N-(2-Cyanoethyl)-3-aminopropyl-Gruppen in Siloxan 1 (bei 100% Umsatz wären es 1 mmol/g).

### c) Absorption und Desorption von SO₂ an Siloxan 1

50 g Siloxan 1 aus Beispiel 1b (0,0475 mol N,N-Bis-2-cyanoethyl-3-aminopropyl-Gruppen) wurden bei 22°C vorgelegt. Mittels Tauchrohr wurde SO₂-Gas, welches aus Natriumsulfit und 25%iger Schwefelsäure erzeugt wurde, so lange bei Normaldruck eingeleitet, bis keine Gewichtszunahme mehr feststellbar war. Die Temperatur stieg während der Einleitung auf maximal 33,4°C an. Nach 3 Stunden wurde die Dosierung beendet. Die Massezunahme betrug 4,5 g (= 9 Masse-%), was 0,07 mol SO₂ entspricht. Die spezifische Aufnahme lag demnach bei 1,47 mol SO₂ pro Mol N,N-Bis-2-cyanoethyl-3-aminopropyl- und N-(2-Cyanoethyl)-3-aminopropyl-Gruppen.

An einer Probe dieses SO₂-gesättigten Produkts wurde mittels DSC im Edelstahltiegel unter Stickstoffatmosphäre das thermische Verhalten zwischen Raumtemperatur und 400°C untersucht. Bei 205°C trat eine Exothermie auf. Die freigesetzte Wärmemenge lag bei 225 kJ/kg. Normiert auf die im Siloxan vorhandenen Aminfunktionen (0,95 mmol/g) entspricht dies einer Wärmemenge von 237 kJ/mol N,N-Bis-2-cyanoethyl-3-aminopropyl-Gruppen. Bei einer abgeschätzten Wärmekapazität Cₚ von 1,8 kJkg⁻¹K⁻¹ würde die freigesetzte Wärmemenge zu einer adiabatischen Temperaturerhöhung von 125 K führen.

47,5 g des mit SO₂ gesättigten Siloxans wurden binnen 15 Minuten auf 100°C aufgeheizt, um das gebundene SO₂ auszutreiben. Dabei wurde ein leichter Stickstoffstrom von 5 l/h übergeleitet. Nach einer Stunde lag die Gewichtsabnahme bei 3,9 g, was der gebundenen SO₂-Menge nahezu vollständig entspricht.

Der Rückstand wurde erneut bei 24 - 28°C mit SO₂ gesättigt. Die Massezunahme lag wieder bei 9 Masse-%. Die anschließende Desorption bei 100°C erfolgte ebenfalls wieder vollständig.

### Beispiel 2: Verwendung eines erfindungsgemäßen Polysiloxans als festen SO₂-Absorber

### a) Nachbehandlung von Siloxan 1 mit Isopropenylacetat (MF23)(Herstellung von Siloxan 2)

Eine Mischung aus 64 g Siloxan 1 und 32 g Isopropenylacetat wurde drei Stunden auf Rückfluss erhitzt, danach wurden alle flüchtigen Bestandteile bis 85°C/3hPa abdestilliert. Man isolierte eine rötliche, klare Flüssigkeit (Siloxan 2). Über ¹H-NMR-Spektroskopie konnte der vollständige Umsatz der freien NH-Gruppen zu Acetamidresten nachgewiesen werden.

### b) Herstellung eines elastischen Silicon-Formkörpers aus Siloxan 2

10,00 g des Siloxans 2 (6 mmol Vinyl) wurden mit 1,95 g eines H-Vernetzers der mittleren Formel Me₃Si-(OSiMe₂)₆₄-(OSiHMe)₃₁-OSiMe₃ (6 mmol) 2,00 g HDK SKS 300 (hydrophobierte hochdisperse Kieselsäure der WACKER CHEMIE AG) dreimal jeweils 4 Minuten mit dem SpeedMixer™ vermischt, danach wurden mit dem SpeedMixer™ 0,22 g eines Pt-Katalysators (Karstedt-Katalysator, 1,3- Divinyl-1,1,3,3-tetramethyldisiloxan-Komplex gelöst in Toluol, 0,32 % Pt) eingemischt (50 ppm Pt). Die Mischung wurde im Trockenschrank in einer Aluminiumschale 20 Minuten bei 200°C zu einem elastischen, zylindrischen Formkörper ausgehärtet. Rein rechnerisch ergibt sich im Vulkanisat eine Funktionsdichte von 0,67 mmol/g N,N-Bis-(2-cyanoethyl)-3-aminopropyl- bzw. N-Acetamido-N-(2-cyanoethyl)-3-aminopropyl-Gruppen.

### c) Absorption und Desorption von SO₂ an einem Silicongummi-Körper

Der aus Siloxan 2 hergestellte Silicon-Formkörper wurde in Würfel von etwa 5 mm Kantenlänge zerschnitten. 11,5 g dieser Silicongummi-Teile wurden in einem Glasrohr plaziert und bei 23°C über 2 Stunden einer SO₂-Atmosphäre unter Umgebungsdruck (995 hPa) ausgesetzt. Die Gewichtszunahme betrug 0,556 g, was 8,7 mmol SO₂ entspricht. Die spezifische Aufnahme lag somit bei 1,11 mol SO₂/mol Amin. Erhitzen des Formkörpers auf 100°C setzte das gebundene SO₂ wieder komplett frei.

## Patentansprüche

1. Siloxane der allgemeinen Formel 1
RₙSiO_{(4-n)/2} (1),
wobei
**R** einen Kohlenwasserstoffrest mit 1 - 16 C-Atomen, der substituiert sein kann mit Halogen-, Alkoxy-, Acyloxy-, Oximo-, Acryloxy- oder Methacryloxyresten, einen OH-Rest, C₁-C₄-Alkoxyrest, Oximorest der allgemeinen Formel -O=N**R⁵R⁶**, Aminorest der allgemeinen Formel -N**R⁷R⁸** oder einen Rest der allgemeinen Formel 2
-A-NR¹₂₋ₘ(CR²₂-CR³₂-CN)ₘ (2),
**R¹** Wasserstoff oder Kohlenwasserstoffrest mit 1 - 6 C-Atomen oder -C(O)-R',
**A** einen bifunktionellen Kohlenwasserstoffrest mit 1 - 18 C-Atomen, der unterbrochen sein kann durch ein oder mehrere nicht benachbarte Heteroatome, die ausgewählt werden aus O, S und NR⁴,
**R⁴** Wasserstoff oder Kohlenwasserstoffrest mit 1 - 6 C-Atomen oder einen Rest CR^{2'}₂-CR^{3'}₂-CN oder einen Rest -C(O)-R",
**R', R², R³, R^{2'}**, **R^{3'}** und **R"** Wasserstoff oder Kohlenwasserstoffrest mit 1 - 6 C-Atomen,
**R⁵, R⁶, R⁷** und **R⁸** Methyl-, Ethyl-, n-Propyl- oder i-Propylrest,
**m** die Werte 0, 1 oder 2 und
**n** den durchschnittlichen Wert 2,00 - 2,66 bedeuten, mit der Maßgabe, dass mindestens 50 Mol-% aller Reste **R** Alkylrest bedeuten, mindestens 0,5 Mol-% aller Reste **R** einen Rest der allgemeinen Formel 2 bedeuten, in der **m** die Werte 1 oder 2 bedeutet,
bei mindestens 5 Mol-% aller Reste der allgemeinen Formel 2 **m** den Wert 2 bedeutet,
maximal 10 Mol-% aller Reste **R¹** einen Wasserstoffrest bedeuten und
mindestens 3 und maximal 2000 Si-Atome pro Molekül vorliegen.

2. Siloxane nach Anspruch 1, bei denen der Kohlenwasserstoffrest **R** 1 - 6 C-Atome aufweist.

3. Siloxane nach einem oder mehreren der vorangehenden Ansprüche, bei denen die Reste **A** ausgewählt werden aus CH₂-CH₂-CH₂-, -CH₂-CH₂-CH₂-N(-CH₂-CH₂-CN)-CH₂-CH₂-, -CH₂-CH₂-CH₂-N(-COCH₃)-CH₂-CH₂- und -CH₂-CH₂-CH₂-NH-CH₂-CH₂-.

4. Siloxane nach einem oder mehreren der vorangehenden Ansprüche, bei denen mindestens zwei ungesättigte Kohlenwasserstoffreste pro Molekül Siloxane der allgemeinen Formel 1 vorliegen.

5. Siloxane nach einem oder mehreren der vorangehenden Ansprüche, bei denen **m** bei mindestens 20 Mol-% aller Reste der allgemeinen Formel 2 den Wert 2 aufweist.

6. Verfahren zur Vernetzung der Siloxane der allgemeinen Formel 1 gemäß einem oder mehreren der Ansprüche 1 bis 5 zu Vulkanisaten durch Feuchtigkeitsvernetzung über Hydrolyse und Kondensation an den Siloxanen der allgemeinen Formel 1 vorhandenen Si-gebundene Amino-, Alkoxy- oder Oximo-Gruppen oder durch Additionsvernetzung über an den Siloxanen der allgemeinen Formel 1 vorhandenen ungesättigten Kohlenwasserstoffresten mit SiH-Vernetzern oder durch Strahlenvernetzung über an den Siloxanen der allgemeinen Formel 1 vorhandenen photovernetzbaren Gruppen.

7. Vulkanisate der Siloxane der allgemeinen Formel 1, herstellbar nach dem Verfahren gemäß Anspruch 6.

8. Verfahren zur reversiblen Bindung von Schwefeldioxid an den Siloxanen der allgemeinen Formel 1 gemäß einem oder mehreren der Ansprüche 1 bis 4 oder an den Vulkanisaten der Siloxane der allgemeinen Formel 1 gemäß Anspruch 7.

## Claims

1. Siloxanes of the general formula 1
RₙSiO_{(4-n)/2} (1),
wherein
**R** is a hydrocarbon radical having 1 - 16 carbon atoms, which may be substituted by halogen, alkoxy, acyloxy, oximo, acryloxy or methacryloxy radicals, an OH radical, C₁-C₄-alkoxy radical, oximo radical of the general formula -O=N**R⁵R⁶**, amino radical of the general formula -N**R⁷R⁸** or a radical of the general formula 2
-A-NR¹₂₋ₘ(CR²₂-CR³₂-CN)ₘ (2),
**R¹** is hydrogen or hydrocarbon radical having 1 - 6 carbon atoms or -C(O)-R',
**A** is a bifunctional hydrocarbon radical having 1 - 18 carbon atoms, which may be interrupted by one or more non-adjacent heteroatoms selected from O, S and NR⁴,
**R⁴** is hydrogen or hydrocarbon radical having 1 - 6 carbon atoms or a radical CR^{2'}₂-CR^{3'}₂-CN or a radical -C(O)-R",
**R', R², R³, R^{2'}**, **R^{3'}** and **R"** are hydrogen or hydrocarbon radicals having 1 - 6 carbon atoms,
**R⁵, R⁶, R⁷** and **R⁸** are methyl, ethyl, n-propyl or isopropyl radicals,
**m** has the values 0, 1 or 2 and
**n** has the average value 2.00 - 2.66,
with the proviso that
at least 50 mol% of all **R** radicals are alkyl radicals,
at least 0.5 mol% of all **R** radicals are a radical of the general formula 2 in which **m** has the values 1 or 2,
in at least 5 mol% of all radicals of the general formula 2, **m** has the value 2,
at most 10 mol% of all **R¹** radicals are a hydrocarbon radical and
at least 3 and at most 2000 Si atoms are present per molecule.

2. Siloxanes according to Claim 1, in which the hydrocarbon radical **R** comprises 1 - 6 carbon atoms.

3. Siloxanes according to one or more of the preceding claims, in which the radicals **A** are selected from CH₂-CH₂-CH₂-, -CH₂-CH₂-CH₂-N(-CH₂-CH₂-CN)-CH₂-CH₂-, -CH₂-CH₂-CH₂-N(-COCH₃)-CH₂-CH₂- and -CH₂-CH₂-CH₂-NH-CH₂-CH₂-.

4. Siloxanes according to one or more of the preceding claims, in which at least two unsaturated hydrocarbon radicals are present per molecule of siloxane of the general formula 1.

5. Siloxanes according to one or more of the preceding claims, in which **m** has the value 2 in at least 20 mol% of all radicals of the general formula 2.

6. Process for crosslinking the siloxanes of the general formula 1 according to one or more of Claims 1 to 5, to give vulcanizates by moisture crosslinking via hydrolysis and condensation of the Si-bonded amino, alkoxy or oximo groups present in the siloxanes of the general formula 1 or by addition-crosslinking via unsaturated hydrocarbon radicals having SiH crosslinkers present in the siloxanes of the general formula 1 or by radiation crosslinking via photocrosslinkable groups present in the siloxanes of the general formula 1.

7. Vulcanizates of the siloxanes of the general formula 1, preparable by the process according to Claim 6.

8. Process for the reversible bonding of sulfur dioxide to the siloxanes of the general formula 1 according to one or more of Claims 1 to 4 or to the vulcanizates of the siloxanes of the general formula 1 according to Claim 7.

## Revendications

1. Siloxanes de la formule générale 1 :
RₙSiO_{(4-n)/2} (1)
dans laquelle
**R** signifie un radical hydrocarboné de 1 à 16 atomes C, qui peut être substitué avec des radicaux halogène, alcoxy, acyloxy, oximo, acryloxy ou méthacryloxy,
un radical OH, un radical alcoxy en C₁-C₄, un radical oximo de la formule générale -O=N**R⁵R⁶**, un radical amino de la formule générale -N**R⁷R⁸** ou un radical de la formule générale 2 :
-A-NR¹₂₋ₘ(CR²₂-CR³₂-CN)ₘ (2)
**R¹** signifie l'hydrogène ou un radical hydrocarboné de 1 à 6 atomes C ou -C(O)-R',
**A** signifie un radical hydrocarboné bifonctionnel contenant 1 à 18 atomes C, qui peut être interrompu par un ou plusieurs hétéroatomes non voisins, qui sont choisis parmi O, S et NR⁴,
**R⁴** signifie l'hydrogène ou un radical hydrocarboné de 1 à 6 atomes C, ou un radical CR^{2'}₂-CR^{3'}₂-CN ou un radical -C(O)-R",
**R', R², R³, R^{2'}**, **R^{3'}** et **R"** signifient l'hydrogène ou un radical hydrocarboné de 1 à 6 atomes C,
**R⁵, R⁶, R⁷ et R⁸** signifient un radical méthyle, éthyle, n-propyle ou i-propyle,
**m** signifie la valeur 0, 1 ou 2, et
**n** signifie la valeur moyenne 2,00 à 2,66,
à condition que
au moins 50 % en moles de tous les radicaux **R** signifient un radical alkyle,
au moins 0,5 % en moles de tous les radicaux **R** signifient un radical de la formule générale 2 dans laquelle **m** signifie la valeur 1 ou 2,
**m** signifie la valeur 2 dans au moins 5 % en moles de tous les radicaux de la formule générale 2,
au plus 10 % en moles de tous les radicaux **R¹** signifient un radical hydrogène, et
au moins 3 et au plus 2 000 atomes Si par molécule sont présents.

2. Siloxanes selon la revendication 1, dans lesquels le radical hydrocarboné **R** comprend 1 à 6 atomes C.

3. Siloxanes selon une ou plusieurs des revendications précédentes, dans lesquels les radicaux **A** sont choisis parmi CH₂-CH₂-CH₂-, -CH₂-CH₂-CH₂-N(-CH₂-CH₂-CN) -CH₂-CH₂-, -CH₂-CH₂-CH₂-N(-COCH₃)-CH₂-CH₂- et -CH₂-CH₂-CH₂-NH-CH₂-CH₂-.

4. Siloxanes selon une ou plusieurs des revendications précédentes, dans lesquels au moins deux radicaux hydrocarbonés insaturés par molécule de siloxanes de la formule générale 1 sont présents.

5. Siloxanes selon une ou plusieurs des revendications précédentes, dans lesquels **m** présente la valeur 2 dans au moins 20 % en moles de tous les radicaux de la formule générale 2.

6. Procédé de réticulation des siloxanes de la formule générale 1 selon une ou plusieurs des revendications 1 à 5 pour former des vulcanisats par réticulation à l'humidité par hydrolyse et condensation de groupes amino, alcoxy ou oximo reliés à Si présents dans les siloxanes de la formule générale 1, ou par réticulation par addition de radicaux hydrocarbonés insaturés présents dans les siloxanes de la formule générale 1 avec des agents de réticulation SiH, ou par réticulation par rayonnement de groupes photoréticulables présents dans les siloxanes de la formule générale 1.

7. Vulcanisats des siloxanes de la formule générale 1, pouvant être fabriqués par le procédé selon la revendication 6.

8. Procédé de liaison réversible de dioxyde de soufre aux siloxanes de la formule générale 1 selon une ou plusieurs des revendications 1 à 4 ou aux vulcanisats des siloxanes de la formule générale 1 selon la revendication 7.
